**Europäisches Patentamt**

**European Patent Office**

**Office européen des brevets**

(19)

(11) Veröffentlichungsnummer: **0 026 274**
· **B1**

(12) EUROPÄISCHE PATENTSCHRIFT

(45) Veröffentlichungstag der Patentschrift:
30.05.84

(51) Int. Cl.³: **G 01 B 7/28, G 01 B 7/00**

(21) Anmeldenummer: 80103914.0

(22) Anmeldetag: 09.07.80

(54) Zahnflankenprüfgerät sowie Verfahren zum Prüfen von Zahnflanken.

(30) Priorität: 13.08.79 CH 7417/79

(43) Veröffentlichungstag der Anmeldung:
08.04.81 Patentblatt 81/14

(45) Bekanntmachung des Hinweises auf die Patenterteilung:
30.05.84 Patentblatt 84/22

(84) Benannte Vertragsstaaten:
CH DE FR GB IT LI SE

(56) Entgegenhaltungen:
EP - A - 0 019 075
DE - A - 2 354 248
DE - A - 2 364 916
DE - A - 2 747 828
DE - B - 1 294 033
US - A - 3 741 659

(73) Patentinhaber: Maag-Zahnräder und -Maschinen Aktiengesellschaft, Hardstrasse 219, CH-8023 Zürich (CH)

(72) Erfinder: Sterki, Armin, Rinderweid 3, CH-8707 Uetikon / a.S. (CH)
Erfinder: Sommer, Gerd Robert, Hätschenstrasse 19, CH-8953 Dietikon (CH)

(74) Vertreter: Hotz, Klaus, Dipl.-El.-Ing. / ETH, c/o Maag-Zahnräder und -Maschinen Aktiengesellschaft Hardstrasse 219, CH-8023 Zürich (CH)

ACTORUM AG

**Beschreibung**

Die Erfindung betrifft ein Zahnflankenprüfgerät mit einem an einer Verzahnungsmaschine aufstellbaren Gehäuse, an dem ein Messfühler mittels zweier kreuzweise angeordneter Schlitten mit zugehörigen Antriebseinrichtungen und Wegmesseinrichtungen in Richtung zweier die Symmetrieachse des Prüflings schneidender Koordinatenachsen bewegbar angeordnet ist, und mit einer Steuer- und Auswertschaltung zum Entlangführen des Messfühlers an einer Zahnflanke des Prüflings sowie zum Vergleichen der Iststellungen des Messfühlers mit vorgegebenen Sollstellungen.

Gegenstand der Erfindung ist ferner ein Verfahren zum Prüfen von Zahnflanken mit einem solchen Zahnflankenprüfgerät.

Unter einer Verzahnungsmaschine soll im Zusammenhang mit der vorliegenden Erfindung jede beliebige zum Bearbeiten von zahnrad- oder zahnsegmentförmigen Werkstücken geeignete Maschine wie Zahnradhobel- oder Zahnradschleifmaschine verstanden werden, bei der die für solche Maschinen typische Möglichkeit besteht, das Werkstück langsam um seine eigene Symmetrieachse in bezug auf ein Bett, einen Ständer oder dergleichen der Maschine zu drehen.

Die Angabe, dass das Gehäuse des Zahnflankenprüfgerätes an der Verzahnungsmaschine aufstellbar sei, hat zu bedeuten, dass einerseits nicht alle Bestandteile des Zahnflankenprüfgerätes unbedingt auf der Verzahnungsmaschine aufgestellt werden müssen, sondern dass die Steuer- und Auswertschaltung gesondert und in beliebigem Abstand von der Verzahnungsmaschine untergebracht werden kann, und dass anderseits das Gehäuse nicht ständig an ein und derselben Verzahnungsmaschine aufgestellt zu sein braucht, sondern wahlweise und abwechselnd an jeweils einer von mehreren Verzahnungsmaschinen aufgestellt werden kann, um Verzahnungsmessungen an einem Prüfling durchzuführen, während dieser auf die betreffende Verzahnungsmaschine aufgespannt ist, so dass er nach dem Messvorgang weiterbearbeitet werden kann, ohne erneut zentriert werden zu müssen.

Die Angabe, dass der Messfühler mittels zweier kreuzweise angeordneter Schlitten in Richtung zweier die Symmetrieachse des Prüflings schneidender Koordinatenachsen bewegbar sei, soll keineswegs ausschliessen, dass der Messfühler mittels eines dritten Schlittens auch noch in Richtung einer dritten Koordinatenachse, insgesamt also in einem räumlichen, vorzugsweise rechtwinkligen Koordinatensystem bewegbar ist. Eine solche zusätzliche Bewegungsmöglichkeit ist jedoch im allgemeinen nur dann erforderlich, wenn das Zahnflankenprüfgerät nicht nur zum Prüfen des Zahnflankenprofils, sondern auch zum Prüfen der Zahnschräge verwendet werden soll.

Unter Iststellungen des Messfühlers sollen die tatsächlichen Stellungen verstanden werden, die der Messfühler während des Messens einnimmt, unter Sollstellungen dagegen diejenigen, die er einnehmen würde, wenn die gemessene Zahnflanke fehlerfrei wäre.

Jedes Prüfen setzt sich aus zwei Vorgängen zusammen, nämlich dem Feststellen eines Istzustandes und dem Vergleichen des Istzustandes mit einem Sollzustand. Ein Zahnflankenprüfgerät hat deshalb nicht nur beispielsweise das Istprofil einer Zahnflanke zu ermitteln, sondern hat dieses mit einem Sollprofil zu vergleichen. Aus diesem Grund genügen zum Prüfen von Zahnflanken solche bekannten Verfahren und Vorrichtungen (z.B. DE-A-2 654 839) nicht, die dazu bestimmt sind, die Konturen von einem in seinen Abmessungen völlig unbekannten Werkstück in zwei oder mehr Dimensionen zu vermessen. Hier fehlt nämlich die Vergleichsanalyse bezüglich des Sollzustands.

Die Erfindung geht deshalb von einem Zahnflankenprüfgerät der eingangs beschriebenen Gattung aus, also einem Gerät mit einer Steuer- und Auswertschaltung zum Entlangführen des Messfühlers an einer Zahnflanke des Prüflings sowie zum Vergleichen des Iststellungen des Messfühlers mit vorgegebenen Sollstellungen.

Bei einem bekannten Zahnflankenprüfgerät dieser Gattung (DE-A-2 364 916), das nicht nur zum Prüfen von Zahnflankenprofilen geeignet ist, sondern auch zum Prüfen von Zahnschrägungswinkeln, und aus diesem Grund einen längs der drei Achsen eines räumlichen Koordinatensystems bewegbaren Messfühler aufweist, ist die Steuer- und Auswertschaltung so ausgestaltet, dass sie den Messfühler bei Stillstand des Prüflings auf einer vorbestimmten, dem Sollprofil bzw. der Sollschräge des Prüflings entsprechenden Bahn bewegt und die dabei auftretenden Auslenkungen des Messfühlers als Fehler registriert. Für diese Art, den Messfühler zu steuern, ist es erforderlich, dass die gesamten Bahndaten des Messfühlers nicht nur vorab koordinatenweise gespeichert sind, sondern dass diese Bahndaten aufgrund erster Messergebnisse derart transponiert werden, dass sie der von vornehrein nicht feststehenden räumlichen Anordnung des Gehäuses des Zahnflankenprüfgerätes in bezug auf den Prüfling entsprechen. Der dafür erforderliche Aufwand an Rechnerkapazität und Programmierung ist erheblich.

Es ist zwar auch schon ein Zahnflankenprüfgerät vorgeschlagen worden (US-A-3 741 659), bei dem der Prüfling von einem eigenen Antrieb um seine Achse gedreht wird und der Messfühler nicht auf einer vorbestimmten Bahn bewegt, sondern mittels Servomotoren an der von ihm abgetasteten Zahnflanke entlanggeführt wird, wobei die Drehung des Prüflings die Leitgrösse für den gesamten Bewegungsablauf bildet. Die für das Prüfen der Zahnflanken erforderliche Zuordnung der Istdaten zu Solldaten setzt hier voraus, dass einerseits zwischen der Achse des Prüflings und den Führungen für die kreuzweise angeordneten Schlitten, die den Messfühler tragen, eine vorbestimmte räumliche Zuordnung besteht und anderseits dem Drehantrieb für den Prüfling eine Messeinrichtung zugeordnet ist, die in jedem Augenblick die Drehwinkelstellung des Prüflings höchst genau anzuzeigen vermag. Bei üblichen Verzahnungsmaschinen ist jedoch weder eine solche Messeinrichtung vorhanden, noch besteht eine vorgegebene Zuordnung zwischen der Drehachse des Prüflings und einem nur vorübergehend auf der Verzahnungsmaschine aufstellbaren Gehäuse eines Zahnflankenprüfgerätes.

In diesem Zusammenhang ist es auch bereits bekannt (DE-A-2 747 828), einen Prüfling um seine Achse zu drehen und über einen festangeordneten und gegen die Kontur des Prüflings bewegbaren Messbolzen Informationen über seine Profillinien zu erhalten. Die einzelnen Messpunkte werden dabei bezüglich der entsprechenden Drehwinkelstellung erfasst und mit einem vorgegebenen Sollprofil verglichen. Bei derartigen Prüfgeräten liegt aber vor Beginn des Messvorgangs die Zuordnung zwischen Zentrum des Prüflings und Achse des Messtasters durch gestellfeste Anordnung fest.

Es sind letztlich auch ein Verfahren zum Prüfen von Zahnflanken sowie ein dabei verwendetes Zahnflankenprüfgerät bekanntgeworden (EP-A-0 019 075: Stand der Technik gemäss Artikel 54 (3) EPÜ) mit einem an einer Verzahnungsmaschine aufstellbarem Gehäuse, das mit zwei an jeweils zwei benachbarte Zahnflanken andrückbare Tastbolzen arbeitet. Bei diesem Gerät erfüllen die Tastbolzen allerdings eine statische Funktion, und es wird jeweils nur der Abstand zwischen diesen beiden Tastbolzen – zu Beginn eines Messzyklus – ermittelt. Das Mass der Stellung eines Tastbolzens in Y-Richtung spielt dabei keine Rolle.

Der Erfindung liegt deshalb die Aufgabe zugrunde, ein Zahnflankenprüfgerät der eingangs beschriebenen Gattung derart zu gestalten, dass es mit einem im Vergleich zu dem beschriebenen Stand der Technik geringen Aufwand an Rechnerkapazität und -programmierung imstande ist, die räumliche Zuordnung seines nur für eine Prüfung oder Prüfreihe auf einer Verzahnungsmaschine aufgestellten Gehäuse zu dem auf der Verzahnungsmaschine aufgespannten Prüfling festzustellen und diese Feststellung etwaigen Veränderungen beim Prüfvorgang laufend anzupassen.

Die Aufgabe ist erfindungsgemäss dadurch gelöst, dass am Gehäuse ein mit Abstand vom Messfühler an zwei einander benachbarte Zahnflanken des Prüflings andrückbarer Tastbolzen mittels zweier zusätzlicher, kreuzweise angeordneter Schlitten parallel zu den beiden Koordinatenachsen frei bewegbar geführt ist und dass jedem dieser Schlitten ebenfalls eine an die Steuer- und Auswertschaltung angeschlossene Wegmesseinrichtung zugeordnet ist.

Der in der beschriebenen Weise angeordnete Tastbolzen, dessen Lage in bezug auf den Messfühler jederzeit vom Zahnflankenprüfgerät selbst festgestellt werden kann, ermöglicht einerseits zu Beginn jeder Messung oder Messreihe einen Orientierungsvorgang, durch den die räumliche Lage des Gehäuses des erfindungsgemässen Zahnflankenprüfgerätes in bezug auf die Symmetrieachse des Prüflings festgestellt wird, und ermöglicht anderseits während des eigentlichen Prüfvorganges eine fortlaufende Feststellung des Drehwinkels des Prüflings in bezug auf ein durch das Gehäuse festgelegtes Koordinatensystem des Zahnflankenprüfgerätes. Der Antrieb für die Relativbewegung des Prüflings in bezug auf das Gehäuse des Zahnflankenprüfgerätes braucht deshalb weder eine eigene Messvorrichtung aufzuweisen, noch besondere Anforderungen an Spielfreiheit und Gleichmässigkeit zu erfüllen; unabhängig von jeglicher Ungenauigkeit dieses Antriebes stellt der erfindungsgemässe Tastbolzen jeweils die tatsächliche Drehwinkelstellung des Prüflings fest.

Der Aufwand an Rechnerkapazität und -programmierung lässt sich bei dem erfindungsgemässen Zahnflankenprüfgerät besonders gering halten, wenn vor Beginn des beschriebenen Orientierungsvorganges ein Ausrichtvorgang stattfindet, durch den dafür gesorgt wird, dass die durch die beiden genannten Koordinatenachsen definierte Ebene der sich normal zur Symmetrieachse des Prüflings erstreckt, also eine waagrechte Ebene ist, wenn die Symmetrieachse des Prüflings senkrecht steht. Dieser Ausrichtvorgang lässt sich besonders einfach durchführen, wenn gemäss einer Weiterbildung der Erfindung am Gehäuse des erfindungsgemässen Zahnflankenprüfgerätes zwei ebene Bezugsflächen zueinander und zu der Bewegungsebene des Tastbolzens senkrecht angeordnet sind, wenn ferner an das Gehäuse zwei Neigungsmessgeräte zum Messen von Neigungen des Gehäuses in der Ebene je einer der beiden Bezugsflächen angebaut sind, diese Neigungsmessgeräte über je eine Abgleichschaltung mit je einem weiteren Neigungsmessgerät verbunden sind, das wahlweise nacheinander an der zugehörigen Bezugsfläche und am Prüfling zu befestigen ist, und wenn schliesslich das Gehäuse zwei einstellbare Füsse hat, die zusammen mit einem weiteren Fuss die Ecken eines Dreiecks bilden.

Weiterhin soll ein Verfahren zum Prüfen von Zahnflanken mit einem Zahnflankenprüfgerät, wie es oben beschrieben worden ist, angegeben werden. Die Lösung dieser Teilaufgabe ist im Anspruch 3 definiert.

Somit läuft die Prüfung einer Zahnflanke oder einer Reihe von Zahnflanken mit dem erfindungsgemässen Gerät vorzugsweise folgendermassen ab: Das Gehäuse wird in bezug auf den Prüfling so eingestellt, dass die Bewegungsebene des Tastbolzens, also die Ebene der beiden genannten Koordinatenachsen, sich im rechten Winkel zur Symmetrieachse des Prüflings erstreckt und der Tastbolzen an zwei einander benachbarten Zahnflanken des Prüflings anliegt, der Prüfling um seine Symmetrieachse gedreht wird, die dadurch hervorgerufenen Bewegungen des Tastbolzens parallel zu den beiden genannten Koordinatenachsen gemessen werden, aus diesen Messungen der Abstand des Tastbolzens von der Symmetrieachse des Prüflings sowie die Lage dieser Achse ermittelt werden, sodann der Prüfling wieder um seine Symmetrieachse gedreht wird, während im Abstand vom Tastbolzen der Messfühler zum Messen des Zahnflankenverlaufs hinsichtlich Profil oder Schräge an einer Zahnflanke entlangbewegt wird, zugleich die von der Drehung des Prüflings hervorgerufenen, parallel zu den beiden Koordinatenachsen erfolgenden Bewegungen erneut gemessen und der sich daraus ergebende Drehwinkel des Prüflings der Ermittlung des Sollverlaufs der Zahnflanke zugrunde gelegt wird, mit dem der vom Messfühler festgestellte Istverlauf verglichen wird.

Ein Ausführungsbeispiel des erfindungsgemässen Zahnflankenprüfgerätes sowie je ein Beispiel einer Zahnprofil- und einer Zahnschrägmessung mit diesem Gerät wird im folgenden anhand schematischer Zeichnungen erläutert. Es stellen dar:

Fig. 1 eine Schrägansicht eines Prüflings auf einer nur teilweise gezeichneten Verzahnungsmaschine sowie des mechanischen Teils eines Zahnflankenprüfgerätes, dessen Steuer- und Auswertschaltung in Form eines Blockschaltbildes wiedergegeben ist,

Fig. 2 den mechanischen Teil des Zahnflankenprüfgerätes in vergrösserter Schrägansicht mit anderer Blickrichtung,

Fig. 3a einen ersten Schritt beim Ausrichten des mechanischen Teils des Zahnflankenprüfgerätes in bezug auf den Prüfling,

Fig. 3b einen zweiten Schritt beim Ausrichten,

Fig. 4 den Orientierungsvorgang, durch den die Lage des mechanischen Teils des Zahnflankenprüfgerätes in bezug auf den Prüfling festgestellt wird,

Fig. 5 ein beim Orientieren angewandtes geometrisches Gesetz,

Fig. 6a die Ausgangsstellung einer Zahnprofilprüfung,

Fig. 6b die zugehörige Endstellung,

Fig. 7a die Ausgangsstellung einer Zahnschrägeprüfung in Stirnansicht des Prüflings,

Fig. 7b die zugehörige Endstellung,

Fig. 8a die Ausgangsstellung entsprechend Fig. 7a, jedoch in Schrägansicht des Prüflings,

Fig. 8b die Endstellung entsprechend Fig. 7b, jedoch ebenfalls in Schrägansicht des Prüflings.

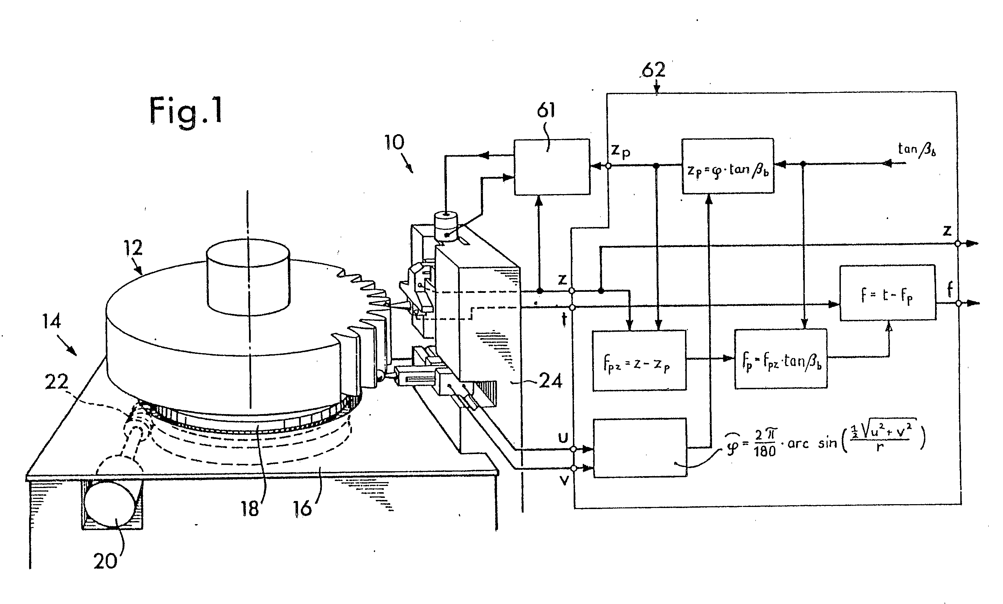

Fig. 1 zeigt ein Zahnflankenprüfgerät 10 beim Prüfen eines Prüflings 12, dargestellt ist ein geradverzahntes Stirnrad, auf einer Verzahnungsmaschine 14. Zwei zueinander rechtwinklige Achsen in einer Stirnebene des Prüflings 12 werden im folgenden als X-Achse und Y-Achse bezeichnet, während die im rechten Winkel, also normal zu diesen beiden Achsen verlaufende Drehachse des Prüflings 12 als Z-Achse bezeichnet wird.

Von der Verzahnungsmaschine 14, einer Zahnradschleifmaschine üblicher Bauart, sind in Fig. 1 nur die im Zusammenhang mit dem Zahnflankenprüfgerät 10 interessierenden Teile dargestellt, nämlich ein ortsfestes Bett 16, auf dem ein Rundtisch 18 um die Z-Achse drehbar gelagert ist, sowie ein Motor 20, der den Rundtisch 18 über ein Schneckengetriebe 22 mit einer für die Zahnflankenprüfung geeigneten, mässigen Geschwindigkeit anzutreiben vermag. Das Zahnflankenprüfgerät 10 hat ein Gehäuse 24, das für die Dauer einer Prüfung oder Reihe von Prüfungen des Prüflings 12 auf dem Bett 16 aufgestellt ist. Der Prüfling 12 ist und bleibt dabei auf dem Rundtisch 18 der Verzahnungsmaschine 14 aufgespannt und zentriert.

Bei der angedeuteten Verzahnungsmaschine 14 handelt es sich um eine solche mit nichtdargestelltem ortsfesten Ständer, an dem ein Schlitten mit einem oder mehreren Bearbeitungswerkzeugen, beispielsweise Schleifscheiben, auf und ab beweglich geführt ist, um den Bearbeitungswerkzeugen hin und her gehende Bewegungen in Zahnlängsrichtung des Prüflings 12 zu erteilen. An der im folgenden beschriebenen Gestaltung und Wirkungsweise des Zahnflankenprüfgerätes 10 bräuchte sich aber nichts zu ändern, wenn der Prüfling 12 auf einer Verzahnungsmaschine zu prüfen wäre, bei der zum Herstellen der Verzahnung erforderliche Drehungen um die Z-Achse nicht vom Prüfling, sondern von einem drehbar gelagerten Ständer ausgeführt werden. In diesem Fall müsste das Gehäuse 24 des Zahnflankenprüfgerätes 10 auf dem Ständer aufgestellt werden, damit – im Prinzip ebenso wie bei der Anordnung gemäss Fig. 1 – zwischen dem Prüfling 12 und dem Gehäuse 24 Relativdrehungen um die Z-Achse möglich sind.

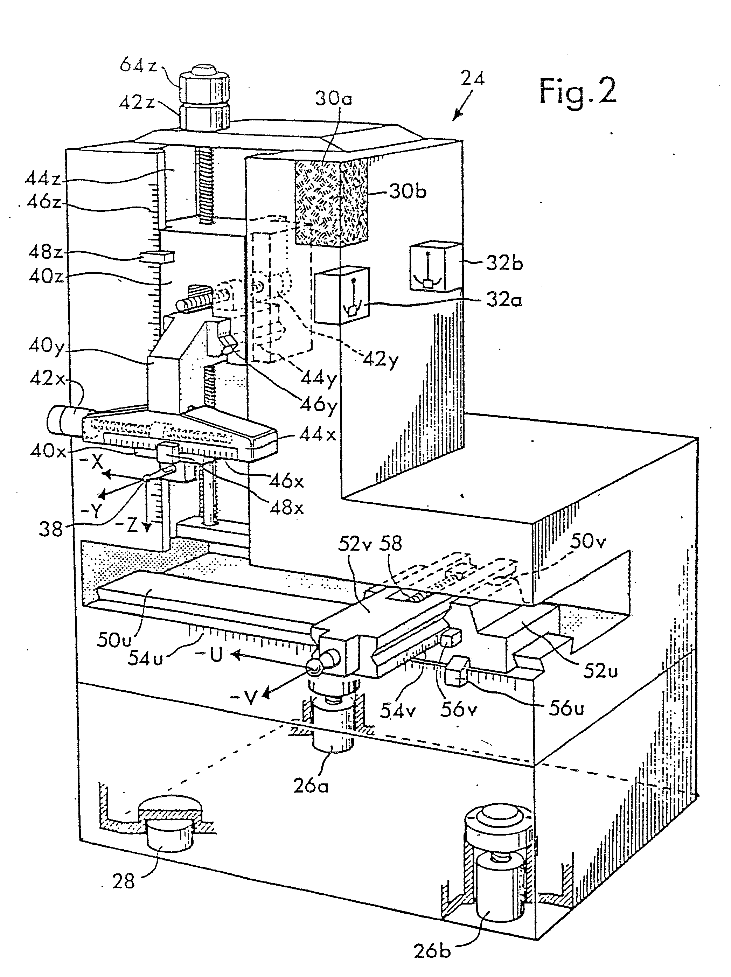

Das Gehäuse 24 hat gemäss Fig. 2 zwei höhenverstellbare Füsse 26a und 26b, die mit Abstand voneinander und von einem festen Fuss 28 an den Ecken eines rechtwinkligen Dreiecks angeordnet sind, dessen rechter Winkel am festen Fuss 28 gebildet ist. In seinem oberen Bereich weist das Gehäuse 24 zwei ebene Bezugsflächen 30a und 30b auf, die miteinander einen rechten Winkel einschliessen. In das Gehäuse 24 sind zwei feste Neigungsmessgeräte 32a und 32b eingebaut, von denen das erste Neigungsmessgerät 32a Abweichungen der ersten Bezugsfläche 30a von der Senkrechten feststellt, während das zweite Neigungsmessgerät 32b Abweichungen der zweiten Bezugsfläche 30b von der Senkrechten feststellt.

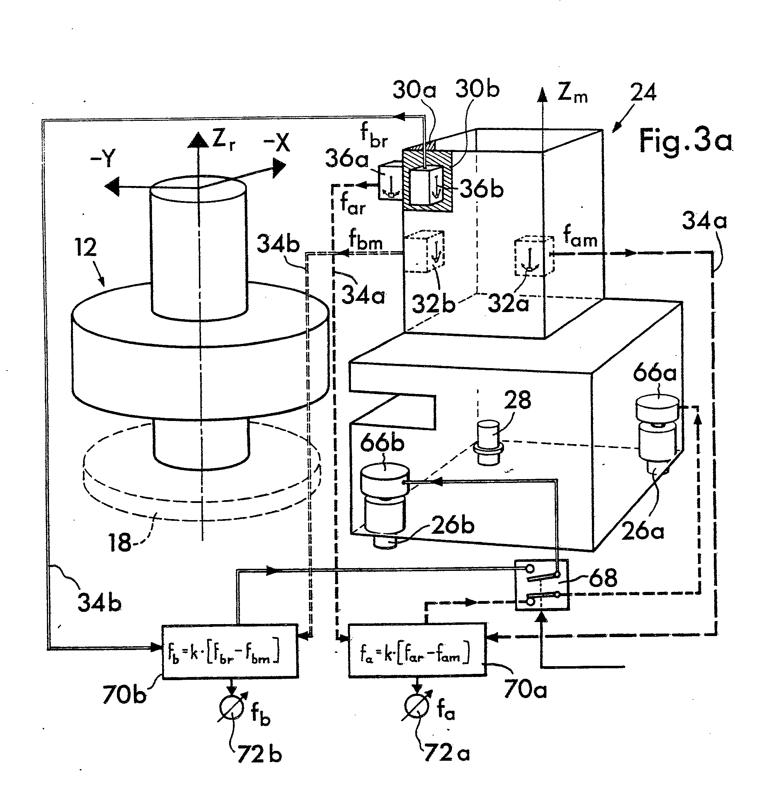

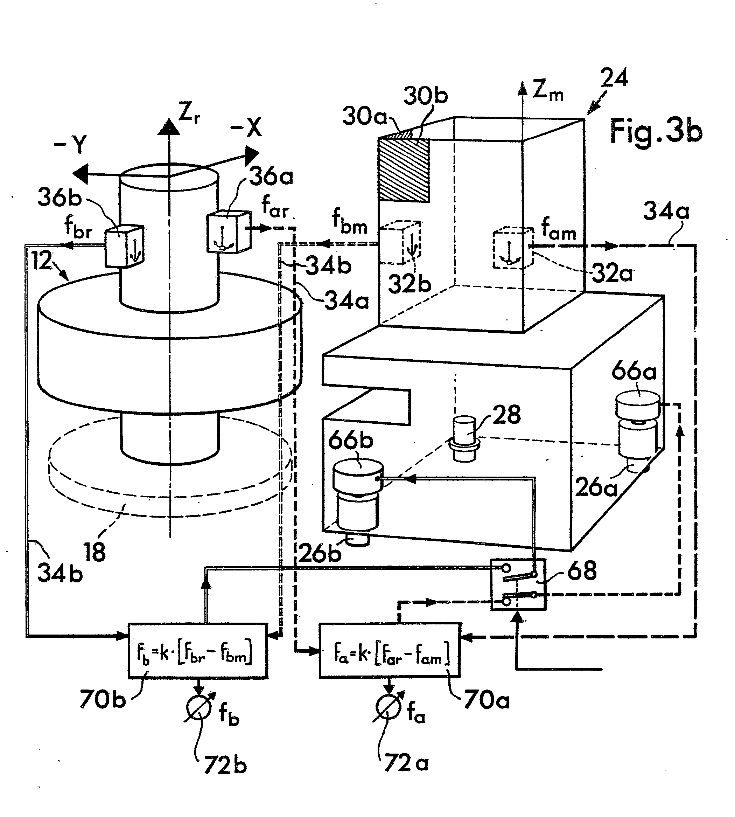

Die beiden festen Neigungsmessgeräte 32a und 32b sind gemäss Fig. 3a und 3b durch je eine Leitung 34a bzw. 34b mit je einem ausserhalb des Gehäuses 24 beweglich angeordneten Neigungsmessgerät 36a bzw. 36b verbunden.

Am Gehäuse 24 ist ein Messfühler 38 längs der drei Koordinatenachsen X, Y und Z verstellbar geführt. Die Verstellbarkeit längs der X-Achse ergibt sich dadurch, dass der Messfühler 38 auf einem X-Schlitten 40x angeordnet ist, der mittels eines X-Servoantriebes 42x längs einer X-Führung 44x verschiebbar ist. An der X-Führung 44x ein X-Massstab 46x vorgesehen, an dem ein am X-Schlitten 40x befestigter X-Ablesekopf 48x in jedem Augenblick die Stellung dieses Schlittens in bezug auf die X-Führung 44x abzulesen vermag.

Die X-Führung 44x ist an einem Y-Schlitten 40y ausgebildet, der seinerseits mittels eines Y-Servoantriebes 42y längs einer Y-Führung 44y verschiebbar ist. Die Führung 44x und eine Parallele zur Führung 44y erstrecken sich im rechten Winkel zueinander und definieren eine in Normalstellung des Gehäuses 24 waagrechte Ebene. An der Y-Führung 44y ist ein Y-Massstab 46y angeordnet, an dem ein nicht dargestellter Y-Ablesekopf die Stellung des Y-Schlittens 40y in bezug auf einen Z-Schlitten 40z abzulesen vermag.

Der Z-Schlitten 40z ist mittels eines Z-Servoantriebes 42z längs einer Z-Führung 44z verschiebbar, die sich im rechten Winkel zur X-Y-Ebene erstreckt und unmittelbar am Gehäuse 24 ausgebildet ist, das einen Z-Massstab 46z aufweist, mit dem ein am Z-Schlitten 40z befestigter Z-Ablesekopf 48z zusammenwirkt.

Am Gehäuse 24 ist ferner eine U-Führung 50u ausgebildet, die sich parallel zur X-Führung 44x erstreckt und einen U-Schlitten 52u führt, dessen Stellung an einem U-Massstab 54u mittels eines am U-Schlitten 52u befestigten U-Ablesekopfes 56u ablesbar ist.

Am U-Schlitten 52u ist eine zur Y-Führung 44y parallele V-Führung 50v ausgebildet, in der ein V-Schlitten 52v verschiebbar geführt ist. Die Stellung des V-Schlittens 52v kann an einem an diesem ausgebildeten V-Massstab 54v mittels eines am U-Schlitten 52u befestigten V-Ablesekopfes 56v abgelesen werden. Der V-Schlitten 52v ist in bezug auf den U-Schlitten 52u durch eine Feder 58 in der Richtung vorgespannt, die in Fig. 2 mit -V bezeichnet ist. Am V-Schlitten 52v ist ein Tastbolzen 60 auswechselbar befestigt. Die Befestigung des Tastbolzens 60 am V-Schlitten 52v ist starr, so dass der Tastbolzen 60 jede ihm von aussen aufgezwungene Bewegung in entsprechende Bewegungen der Schlitten 52u und/oder 52v verwandelt. Der Tastbolzen 60 ist also gegenüber dem ihn unmittelbar tragenden Schlitten 52v nicht auslenkbar, ist also selbst nicht als Messbolzen ausgebildet, im Gegensatz zum Messfühler 38, der in bezug auf den X-Schlitten 40x in Richtung der X-Achse auslenkbar ist und bei jeder Auslenkung ein Signal abgibt.

Gemäss Fig. 1 und 2 ist der Messfühler 38 sowie jeder der Servoantriebe 42x, 42y und 42z an eine Steuer- und Auswertschaltung 62 angeschlossen, die in einigem Abstand von der Verzahnungsmaschine 14 in einem gesonderten Gehäuse untergebracht sein kann. Zwischen jedem der Servoantriebe 42x, 42y und 42z und der Steuer- und Auswertschaltung 62 kann ein unmittelbar am oder im Gehäuse 24 angeordneter Positionsregler vorgesehen sein; in Fig. 1 ist nur für den Z-Servoantrieb 42z ein solcher Positionsregler 61 angedeutet. Dieser Positionsregler 61 hat beim Prüfen der Zahnschräge des Prüflings 12 die Aufgabe, die Bewegung des Z-Schlittens 40z so zu regeln, dass der Messfühler 38 von der Zahnflanke, an der er entlangfährt, stets um einen vorgegebenen Betrag ausgelenkt wird.

Gemäss Fig. 3a und 3b ist jedem der verstellbaren Füsse 26a und 26b ein Servomotor 66a bzw. 66b zugeordnet, der über einen Umschalter 68 an eine Abgleichschaltung 70a bzw. 70b anschliessbar ist. Die Abgleichschaltung 70a liegt in der Leitung 34a zwischen den Neigungsmessgeräten 32a und 36a; in entsprechender Weise liegt die Abgleichschaltung 70b in der Leitung 34b zwischen den Neigungsmessgeräten 32b und 36b.

Jeder der Abgleichschaltungen 70a und 70b ist ein Potentiometer 72a bzw. 72b zugeordnet.

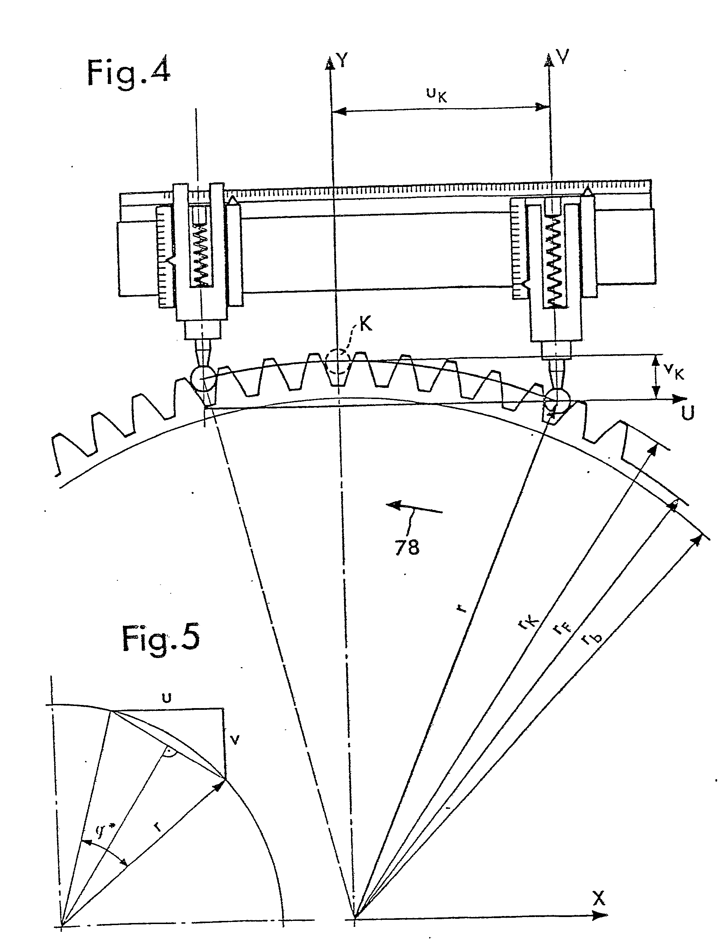

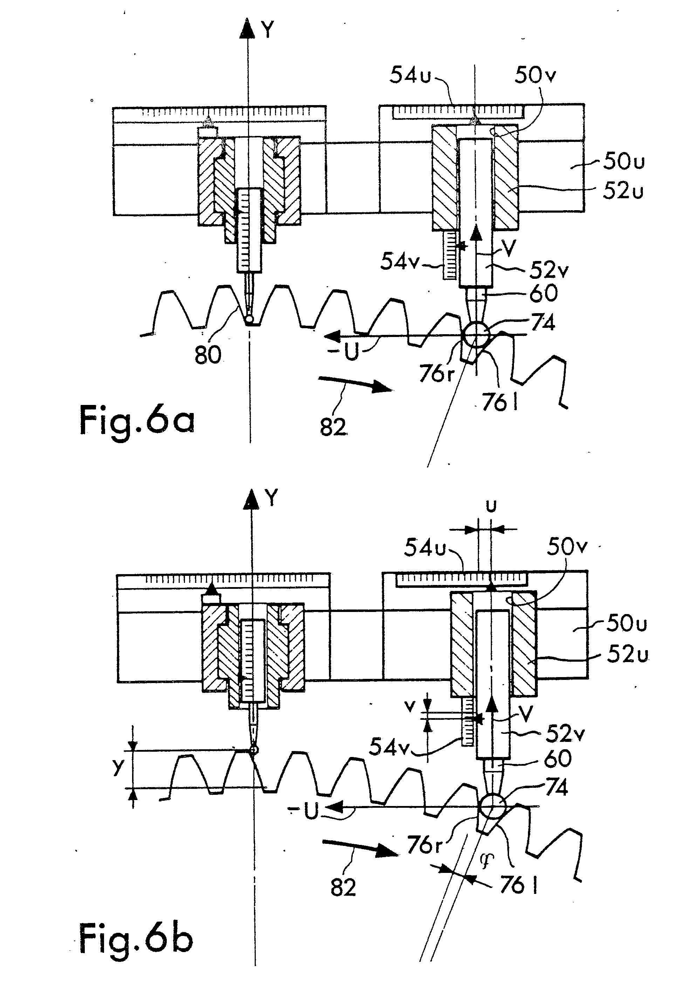

Die X,Y,Z-Schlittenanordnung 40x, 40y und 40z braucht nicht, wie in Fig. 1 und 2 dargestellt, eine vom Messfühler 38 aus gesehen alphabetische Reihenfolge der Schlitten aufzuweisen. Jede beliebige andere Reihenfolge kann denselben Zweck erfüllen; beispielsweise kann der Messfühler 38 gemäss Fig. 6a bis 8b am Y-Schlitten 40y befestigt sein, der längs der Y-Achse verschiebbar am Z-Schlitten 40z geführt ist, welcher seinerseits längs der Z-Achse verschiebbar am X-Schlitten 40x geführt ist, wobei dieser längs der X-Achse verschiebbar unmittelbar am Gehäuse 24 geführt ist. Es könnte auch die U,V-Schlittenanordnung 52u, 52v eine veränderte Reihenfolge aufweisen, doch ist die in Fig. 2 übereinstimmend mit Fig. 4 bis 7b dargestellte Anordnung im allgemeinen vorzuziehen.

Der Tastbolzen 60 hat einen auswechselbaren kugelförmigen Kopf 74, dessen Durchmesser entsprechend der Zahnlückenweite des Prüflings 12 von Fall zu Fall derart gewählt wird, dass der Kopf gemäss Fig. 4 bis 7b an zwei benachbarte Zahnflanken 76l und 76r des Prüflings 12 angelegt werden kann.

Das im Vorstehenden beschriebene Zahnflankenprüfgerät 10 wird zum Prüfen des Zahnflankenprofils und/oder der Zahnschräge des Prüflings 12 folgendermassen vorbereitet und eingesetzt:

Wenn das Gehäuse 24 des Zahnflankenprüfgerätes 10 gemäss Fig. 1 auf dem Bett 16 der Verzahnungsmaschine 14 aufgestellt worden ist, kann nicht ohne weiteres damit gerechnet werden, dass die Längsrichtung der Z-Führung 44z genau parallel zur Z-Achse, also der Drehachse des Prüflings 12, verläuft. Deshalb muss das Gehäuse 24 zunächst entsprechend ausgerichtet werden. Als vorbereitende Massnahme für das Ausrichten wird jedes der beweglichen Neigungsmessgeräte 36a und 36b gemäss Fig. 3a an der zugehörigen Bezugsfläche 30a bzw. 30b befestigt, am einfachsten mit der Kraft je eines in diese Neigungsmessgeräte 36a, 36b eingebauten Dauermagneten. Damit wird erreicht, dass jedes der beweglichen Neigungsmessgeräte 36a und 36b in bezug auf das Gehäuse 24 eine entsprechende Lage einnimmt wie das zugehörige feste Neigungsmessgerät 32a bzw. 32b. Die von den beiden Neigungsmessgeräten 32a und 36a angegebenen Signale $f_{am}$ und $f_{ar}$ werden nötigenfalls durch Verstellen des Potentiometers 72a abgeglichen. In entsprechender Weise werden die von den Neigungsmessgeräten 32b und 36b abgegebenen Signale $f_{bm}$ und $f_{br}$ nötigenfalls durch Verstellen des Potentiometers 72b abgeglichen. Sodann werden die beweglichen Neigungsmessgeräte 36a und 36b gemäss Fig. 3b um 90° gegeneinander versetzt an den Prüfling 12 angelegt. Treten nun erneut Abweichungen zwischen den Signalen $f_{am}$ und $f_{ar}$ oder zwischen den Signalen $f_{bm}$ und $f_{br}$ auf, so ist dies ein Zeichen dafür, dass das Gehäuse 24 in bezug auf den Prüfling 12 nicht ausgerichtet ist. Deshalb muss der bewegliche Fuss 26a und/oder der bewegliche Fuss 26b verstellt werden, bis die genannten Signale wieder ausgeglichen sind. Das Verstellen der beweglichen Füsse 26a, b wird von den Abgleichschaltungen 70a, b über die Servomotoren 66a, b automatisch durchgeführt.

Es sei nun angenommen, das Gehäuse 24 nehme eine Stellung ein, in der sich die Z-Führung 44z parallel zur Z-Achse erstreckt und der kugelförmige Kopf 74 des Tastbolzens 60 mit der Vorspannung der Feder 58 an zwei benachbarten Zahnflanken 76l und 76r anliegt und dabei eine gewisse Entfernung von der Y-Achse hat. Die Ausgangsstellung des Tasters 60 ist in Fig. 4 mit vollen Linien gezeichnet. Nun wird der Prüfling 12 in Richtung des Pfeils 78 in Fig. 4 gedreht, bis der Taster die in Fig. 4 mit strichpunktierten Linien angedeutete Endstellung erreicht hat. Die Wahl der Anfangs- und Endstellung ist in weiten Grenzen beliebig, doch soll die eine Stellung auf der einen und die andere Stellung auf der anderen Seite der Y-Achse sein. Während der Drehung des Prüflings 12 in Richtung des Pfeils 78 durchwandert der kugelförmige Kopf 74 des Tastbolzens 60 seine in Fig. 4 mit einem gestrichelten Kreis angedeutete Kulminationsstellung K, in welcher der Mittelpunkt des Kopfes 74 auf der Y-Achse liegt. Bei der Annäherung an die Kulminationsstellung K verschiebt der Tastbolzen 60 den V-Schlitten 52v in Richtung +V, während er den U-Schlitten 52u in Richtung −U verschiebt. Die Kulminationsstellung K ist diejenige, in der sich die Richtung der Bewegung des V-Schlittens 52v von +V nach −V ändert. Diese Vorzeichenänderung wird von der Steuer- und Auswertschaltung 62 aufgrund der vom V-Ablesekopf 56v abgegebenen Signale mit grosser Genauigkeit festgestellt. Dadurch wird die Lage der Y-Achse für das Zahnflankenprüfgerät 10 zu einer bekannten Grösse.

Bei der Bewegung von der Anfangsstellung in die Kulminationsstellung legt der Kopf 74 gemäss Fig. 4 die Strecken $u_k$ und $v_k$ zurück. Für diese Strecken gilt die Gleichung:

$$u_k^2 + (r - v_k)^2 = r^2$$

Daraus ergibt sich durch einfache Umformung:

$$r = \frac{u_k^2 + v_k^2}{2v_k}$$

Darin ist r der vom Ursprung des X,Y,Z-Koordinatensystems gemessene Radius, auf dem der Mittelpunkt des kugelförmigen Kopfes 74 liegt. Dieser Radius r lässt sich somit nach einer einmaligen Bewegung des Tastbolzens 60 aus einer beliebigen Ausgangsstellung in eine beliebige, jenseits der Kulminationsstellung K gelegene Endstellung zweimal aus je einem Messwertepaar $u_k$, $v_k$ berechnen. Da anderseits der Durchmesser des Kopfes 74 und die Zahnlückenweite des Prüflings 12 bekannt sind, kann das Zahnflankenprüfgerät 10 aus dem gemäss Vorstehendem ermittelten Radius r die Lage des Ursprungs des X,Y,Z-Koordinatensystems auf einfache Weise genau berechnen. Somit ist die Orientierung des Zahnflankenprüfgerätes 10 in bezug auf den Prüfling 12 bekannt.

Wenn nun eine Zahnprofilprüfung durchgeführt werden soll, wird der Messfühler 38 beispielsweise gemäss Fig. 6a in eine Ausgangsstellung am Fuss einer Zahnflanke 80 gebracht, während der Tastbolzen 60 mit seinem kugelförmigen Kopf 74 im Abstand davon wiederum an zwei einander benachbarten Zahnflanken 76l und 76r anliegt. Wird nun der Prüfling 12 in Richtung des Pfeils 82 um den Winkel φ gedreht, so wandert der Messfühler 38 an der Zahnflanke 80 entlang bis zum Zahnkopf, während der Tastbolzen 60 gemäss Fig. 6b die Strecken u und v zurücklegt. Die Ableseköpfe 56u und 56v geben diesen Strecken entsprechende Signale an die Steuer- und Auswertschaltung 62ab und diese berechnet daraus den Winkel φ nach der Gleichung

$$\varphi = 2 \cdot \arcsin \frac{\sqrt{u^2 + v^2}}{2r}$$

die sich ohne weiteres aus Fig. 5 herleiten lässt.

Somit lässt sich mit dem Tastbolzen 60 samt zugehörigen Massstäben 54u und 54v sowie Ableseköpfen 56u und 56v jeder während einer Zahnflankenprüfung vorkommende Drehwinkel φ ermitteln, ohne dass an der Verzahnungsmaschine 14 selbst eine Winkelmesseinrichtung erforderlich ist. Gemessen wird der vom Prüfling tatsächlich zurückgelegte Drehwinkel, so dass das Messergebnis von Ungenauigkeiten des zur Verzahnungsmaschine gehörigen Drehantriebes nicht verfälscht wird.

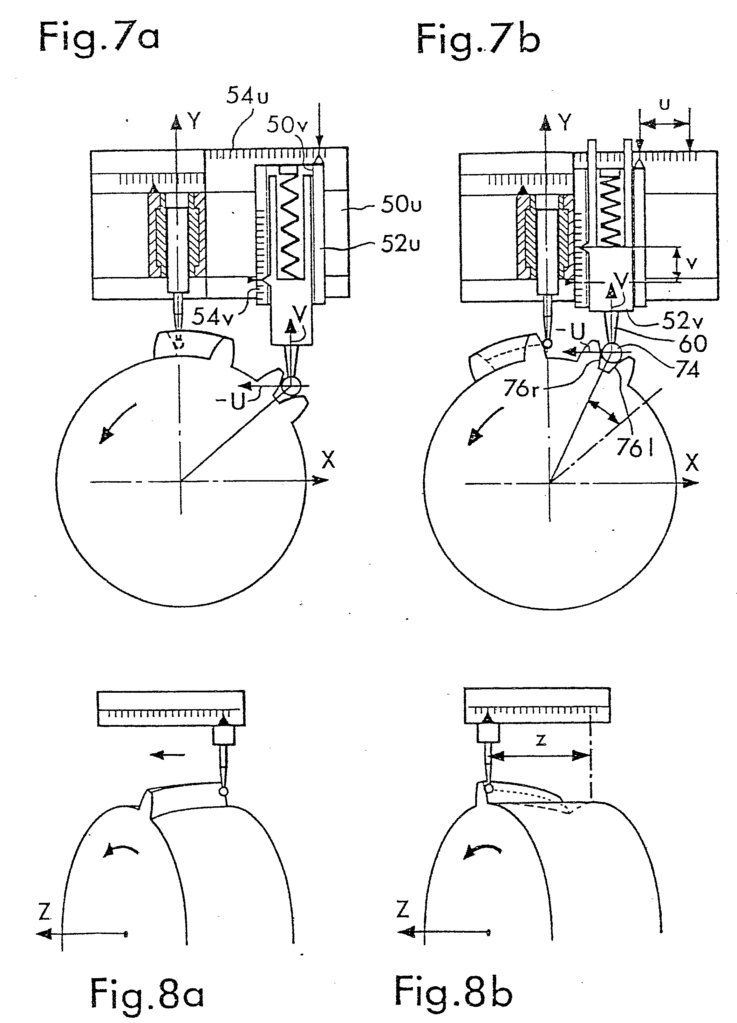

Entsprechendes gilt auch, wenn gemäss Fig. 7a, b und 8a, b die Zahnschräge des Prüflings 12 geprüft wird.

**Patentansprüche**

1. Zahnflankenprüfgerät (10) mit einem an einer Verzahnungsmaschine aufstellbaren Gehäuse (24), an dem ein Messfühler (38) mittels zweier kreuzweise angeordneter Schlitten (44x, 44y) mit zugehörigen Antriebseinrichtungen (42x, 42y) und Wegmesseinrichtungen (46x, 46y) in Richtung zweier die Symmetrieachse (Z) des Prüflings (12) schneidender Koordinatenachsen (X, Y) bewegbar angeordnet ist, und mit einer Steuer- und Auswertschaltung (62) zum Entlangführen des Messfühlers (38) an einer Zahnflanke (80) des Prüflings (12) sowie zum Vergleichen der Iststellungen des Messfühlers (38) mit vorgegebenen Sollstellungen, dadurch gekennzeichnet, dass am Gehäuse (24) ein mit Abstand vom Messfühler (38) an zwei einander benachbarte Zahnflanken (76l, r) des Prüflings (12) andrückbarer Tastbolzen (60) mittels zweier zusätzlicher, kreuzweise angeordneter Schlitten (52u, v) parallel zu den beiden genannten Koordinatenachsen (X, Y) frei bewegbar geführt ist und dass jedem dieser Schlitten (52u, v) ebenfalls eine an die Steuer- und Auswertschaltung (62) angeschlossene Wegmesseinrichtung (54u, v; 56u, v) zugeordnet ist.

2. Zahnflankenprüfgerät nach Anspruch 1, dadurch gekennzeichnet, dass am Gehäuse (24) zwei ebene Bezugsflächen (30a, b) zueinander und zu der Bewegungsebene des Tastbolzens (60) senkrecht angeordnet sind, dass an das Gehäuse (24) zwei Neigungsmessgeräte (32a, b) zum Messen von Neigungen des Gehäuses (24) in der Ebene je einer der beiden Bezugsflächen (30a, b) angebaut sind, dass diese Neigungsmessgeräte (32a, b) über je eine Abgleichschaltung (70a, b) mit je einem weiteren Neigungsmessgerät (36a, b) verbunden sind, das wahlweise nacheinander an der zugehörigen Bezugsfläche (30a, b) und am Prüfling (12) zu befestigen ist, und dass das Gehäuse (24) zwei einstellbare Füsse (26a, b) hat, die zusammen mit einem weiteren Fuss (28) die Ecken eines Dreiecks bilden.

3. Verfahren zum Prüfen von Zahnflanken mit einem Gerät nach Anspruch 1 oder 2, dadurch gekennzeichnet, dass das Gehäuse (24) in bezug auf den Prüfling (12) so eingestellt wird, dass die Bewegungsebene des Tastbolzens (60) sich im rechten Winkel zur Symmetrieachse (Z) des Prüflings (12) erstreckt und der Tastbolzen (60) an zwei einander benachbarten Zahnflanken (76l, r) des Prüflings (12) anliegt, der Prüfling um seine Symmetrieachse (Z) gedreht wird, die dadurch hervorgerufenen Bewegungen des Tastbolzens (60) parallel zu den beiden genannten Koordinatenachsen (X, Y) gemessen werden, aus diesen Messungen der Abstand (r) des Tastbolzens (60) von der Symmetrieachse (Z) des Prüflings (12) sowie die Lage dieser Symmetrieachse (Z) ermittelt werden, sodann der Prüfling (12) wieder um seine Symmetrieachse (Z) gedreht wird, während im Abstand vom Tastbolzen (60) der Messfühler (38) zum Messen des Zahnflankenverlaufs hinsichtlich Profil oder Schräge an einer Zahnflanke (80) entlangbewegt wird, zugleich die von der Drehung des Prüflings (12) hervorgerufenen, parallel zu den beiden genannten Koordinatenachsen (X, Y) erfolgenden Bewegungen des Tastbolzens (60) erneut gemessen werden und der sich daraus ergebende Drehwinkel (φ) des Prüflings (12) der Ermittlung des Sollverlaufs der Zahnflanke (80) zugrunde gelegt wird, mit dem der vom Messfühler (38) festgestellte Istverlauf verglichen wird.

**Claims**

1. Gear tooth flank testing machine (10) with a housing (24) adapted to be set up on a gear cutting machine, and on which a test sensor (38) is arranged movably in the direction of two axes of coordinates (X, Y) intersecting the axis of symmetry (Z) of the test piece (12) by means of two slides (44x, 44y) arranged crosswise with associated drive devices (42x, 42y) and odometric devices (46x, 46y), and with a control and evaluation circuit (62) to guide the test sensor (38) along a tooth flank (80) of the test piece (12) and to compare the actual positions of the test sensor (38) with prescribed desired positions, characterised in that on the housing (24) a feeler pin (60) adapted to be urged against two mutually adjacent tooth flanks (76l, r) of the test piece (12) at a distance from the test sensor (38) is guided with free mobility parallel to the two said axes of coordinates (X, Y) by means of two additional slides (52u, v) and that an odometric device (54u, v; 56u, v) connected to the control and evaluation circuit (62) is likewise associated with each of said slides (52u, v).

2. Gear tooth testing machine according to Claim 1, characterised in that on the housing (24) two plane reference surfaces (30a, b) are arranged at right angles to each other and to the movement plane of the feeler pin (60), that two clinometers (32a, b) to measure inclinations of the housing (24) each in the plane of one of the two reference surfaces (30a, b) are mounted on the housing (24), that said clinometers (32a, b) are connected each through a balancing circuit (70a, b) each to a further clinometer (36a, b) which is attachable selectively and consecutively to the associated reference surface (30a, b) and to the test piece (12), and that the housing (24) has two adjustable feet (26a, b) which together with a further foot (28) form the corners of a triangle.

3. Method of testing gear tooth flanks with a machine according to Claim 1 or 2, characterised in that the housing (24) is adjusted with reference to the test piece (12) so that the movement plane of the feeler pin (60) extends at right angles to the axis of symmetry (Z) of the test piece (12) and the feeler pin (60) is in contact with two mutually adjacent tooth flanks (76l, r) of the test piece (12), the test piece is rotated about its axis of symmetry (Z), the movements of the feeler pin (60) parallel to the two axes of coordinates (X, Y) mentioned thereby caused are measured, from these measurements the distance (r) of the feeler pin (60) from the axis of symmetry (Z) of the test piece (12) and the position of this axis of symmetry (Z) are determined, the test piece (12) is rotated again about its axis of symmetry (Z), whilst at a distance from the feeler pin (60) the test sensor (38) is moved along a tooth flank (80) in order to test the tooth flank pattern as to profile or slope, simultaneously the movements of the feeler pin (60) occurring parallel to the two axes of coordinates (X, Y) mentioned caused by the rotation of the test piece (12) are measured afresh and the angle of rotation (φ) of the test piece (12) resulting therefrom is made a basis for the determination of the desired pattern of the tooth flank (80), with which the actual pattern determined by the test sensor (38) is compared.

**Revendications**

1. Appareil (10) de contrôle de flancs de dents comprenant un carter (24) qui peut se monter sur une machine à tailler les engrenages sur lequel un palpeur de mesure (38) est monté de manière à pouvoir se déplacer le long de deux axes de coordonnées (X, Y) qui coupent l'axe de symétrie (2) de l'engrenage (12) à contrôler au moyen de deux chariots (44x, 44y) disposés dans des directions croisées et équipés de dispositifs d'entraînement (42x, 42y) et de mesure de déplacement (46x, 46y) correspondants, cet appareil comprenant également un circuit de commande et d'exploitation (62) servant à faire circuler le palpeur de mesure (38) le long d'un flanc de dent (80) l'engrenage (12) à contrôler, ainsi qu'à comparer les positions réelles du palpeur de mesure (38) à des positions de consigne prédéterminées, caractérisé en ce qu'une touche (60) qui peut être appuyée contre deux flancs de dents voisins (76l, r) de l'engrenage (12), à contrôler à une certaine distance du palpeur de mesure (38), est guidée sur le carter (24) au moyen de deux chariots complémentaires (52u, v) à mouvement croisés, pour se déplacer librement dans des directions parallèles aux deux axes de coordonnées (X, Y) précités et, en ce qu'à chacun de ces chariots complémentaires (52u, v) est également associé un dispositif de mesure de la course (54u, 54v; 56u, 56v) raccordé au dispositif de commande et d'exploitation (62).

2. Appareil suivant la revendication 1, caractérisé en ce que le carter (24) présente deux surfaces de référence planes (30a, b) perpendiculaires entre elles et au plan du mouvement de la touche (60), en ce que le carter (24) porte deux appareils de mesure de l'inclinaison (32a, b) destinés à mesurer chacun l'inclinaison du carter (24) dans le plan de l'une des deux surfaces de référence planes (30a, b), en ce que ces appareils (32a, b) de mesure de l'inclinaison sont reliés chacun par un dispositif d'équilibrage (70a, b) à un autre appareil de mesure de l'inclinaison (36a, b) qui peut être fixé sélectivement sur la surface de référence correspondante (30a, b) ou sur l'engrenage à contrôler (12) et en ce que le carter (24) est équipé de deux pieds réglables (26a, b) qui forment les sommets d'un triangle en combinaison avec un autre pied (28).

3. Procédé pour contrôler les flancs de dents au moyen d'un appareil suivant la revendication 1 ou 2, caractérisé en ce qu'on règle le carter (24) par rapport à l'engrenage (12) à contrôler de telle manière que le plan du mouvement de la touche (60) s'étende perpendiculairement à l'axe (Z) de l'engrenage (12) à contrôler et que la touche (60) soit appuyée contre deux flancs de dents voisins (76l, r) de l'engrenage (12) à contrôler, on fait tourner la pièce autour de son axe de symétrie (Z), on mesure les déplacements que la touche (60) décrit, par l'effet de cette rotation, parallèlement aux deux axes de coordonnées (X, Y) précités, on calcule à partir de ces mesures la distance (r) entre la touche (60) et l'axe de symétrie (Z) de l'engrenage (12) à contrôler ainsi que la position de cet axe (Z), puis on continue à faire tourner l'engrenage (12) autour de son axe de symétrie (Z) ou on la fait de nouveau tourner autour de son axe (Z) pendant qu'à une certaine distance de la touche (60), le palpeur (38) se déplace le long d'un flanc de dent (80) pour mesurer le contour de dent (son profil ou l'angle d'inclinaison de son hélice) en même temps que les mouvements que la touche (60) décrits, sous l'effet de cette rotation de l'engrenage (12), parallèlement aux deux axes de coordonnées (X, Y) et on prend l'angle ($\varphi$) de rotation de la pièce (12) ainsi obtenu pour base du calcul du profil de consigne du flanc (80) de dent, avec lequel on compare le contour réel constaté par le palpeur de mesure (38).

# Fig.1

$$z_p = \varphi \cdot \tan \beta_b$$

$$f_{pz} = z - z_p$$

$$f_p = f_{pz} \cdot \tan \beta_b$$

$$f = t - f_p$$

$$\widehat{\varphi} = \frac{2\,\pi}{180} \cdot arc\ sin\left(\frac{\frac{1}{2}\sqrt{u^2 + v^2}}{r}\right)$$

0 026 274

0 026 274

Fig.2

11

Fig.3a

$$f_b = k \cdot \left[ f_{br} - f_{bm} \right]$$

$$f_a = k \cdot \left[ f_{ar} - f_{am} \right]$$

Fig.3b

$f_b = k \cdot [f_{br} - f_{bm}]$

$f_a = k \cdot [f_{ar} - f_{am}]$

Fig.4

$Y$ $V$

$u_K$

$K$

$v_K$

$U$

78

$r$ $r_K$ $r_F$ $r_b$

Fig.5

$u$

$v$

$\varphi^*$ $r$

$X$

Fig.6a

Fig.6b

19

# Fig.7a

# Fig.7b

# Fig.8a

# Fig.8b